# EUROPÄISCHE PATENTANMELDUNG

(11) **EP 1 884 710 A1**
(43) Veröffentlichungstag der Anmeldung: **06.02.2008**
(21) Anmeldenummer: 07013549.6
(22) Anmeldetag: 11.07.2007
(51) Int. Cl.: F21V 17/10, B29C 65/34, F21W 101/00

(54) **Leuchte für Fahrzeuge, vorzugsweise Kraftfahrzeuge**

(30) Priorität: 25.07.2006 DE 102006034752
(71) Anmelder: Schefenacker Vision Systems Germany GmbH, 71409 Schwaikheim (DE)
(72) Erfinder: Tebbe, Frank, 88521 Ertlingen (DE); Mertens, Jens, 73734 Esslingen (DE); Müller, Otto Rolf, 73344 Gruibingen (DE)
(74) Vertreter: Jackisch-Kohl, Anna-Katharina

(57) **Zusammenfassung**

Die Leuchte (1) hat ein Gehäuse (3), eine Lichtscheibe (2) und mindestens ein in der Leuchte (1) vorhandenes Leuchtmittel, dessen Strahlen durch die Lichtscheibe (2) nach außen treten. Die Lichtscheibe (2) und das Gehäuse (3) sind über einen Schweißvorgang fest miteinander verbunden, wobei der Schweißvorgang über ein Widerstandselement (5) erfolgt. Dieser Schweißvorgang kann in kürzester Zeit, zuverlässig und kostengünstig ohne die Verwendung eines Zusatz- oder Klebstoffes erfolgen. Die Leuchte (1) wird vorteilhaft für Kraftfahrzeuge eingesetzt.

## Beschreibung

Die Erfindung betrifft eine Leuchte für Fahrzeuge, vorzugsweise für Kraftfahrzeuge, nach dem Oberbegriff des Anspruches 1.

Aus der DE 195 11 165 A1 ist eine Fahrzeugleuchte bekannt, die aus einer Abdeckscheibe, einer Lichtverteilungsoptik mit einem Gehäuse sowie aus im Gehäuse ausgebildeten Reflektoren besteht. Die Lichtscheibe und das Gehäuse sind aus Kunststoff hergestellt, wobei die Innenseiten des Gehäuses vorzugsweise im Bereich der Reflektoren verspiegelt sind. Das Gehäuse weist im Bereich der Reflektoren Öffnungen zur Aufnahme von Lampenträgern auf. Die Verbindung zwischen der Lichtscheibe und dem Gehäuse erfolgt bevorzugt durch Schweißen oder durch Kleben im Randbereich zwischen der Lichtscheibe und dem Gehäuse. Der Reflektorbereich des Gehäuses ist als einteiliges Bauteil im Mehrkomponenten-Spritzguß hergestellt.

Der Erfindung liegt die Aufgabe zugrunde, die gattungsgemäße Leuchte so auszubilden, daß die Lichtscheibe und das Gehäuse schnell und zuverlässig miteinander verbunden werden können.

Diese Aufgabe wird bei der gattungsgemäßen Leuchte erfindungsgemäß mit den kennzeichnenden Merkmalen des Anspruches 1 gelöst.

Bei der erfindungsgemäßen Leuchte wird im Kontaktbereich zwischen der Lichtscheibe und dem Gehäuse das Widerstandsschweißelement eingebracht. Unter Anlegen einer entsprechenden Spannung und eines hierfür geeigneten Stromes schmilzt das Schweißelement den Kunststoff auf. Bei einem anschließenden Aufeinanderpressen findet der eigentliche Schweißvorgang statt. Hierbei durchdringen sich die Kunststoffe der beiden Teile so, daß eine dauerhafte feste Verbindung zwischen der Lichtscheibe und dem Gehäuse erfolgt'. Zusätzliches Material oder sonstige Zusatzstoffe sind nicht erforderlich.

Mit diesem Schweißverfahren kann die Leuchte schnell, einfach und kostengünstig hergestellt werden. Es müssen keine teuren, meist in 3-D-Form herzustellende Werkzeuge oder entsprechend aufwendig programmierbare und kostenintensive Roboterarme und dazugehörige Steuerungen für den Schweißprozeß vorgesehen werden. Es wird eine sehr hohe Qualität der Schweißung erreicht. Beim Anlegen des Stromes kann vorteilhaft über einen Temperaturfühler die Drahttemperatur sehr genau geregelt werden. Der Kunststoff im Fügebereich zwischen dem Gehäuse und der Lichtscheibe wird sehr schonend erwärmt und nur in diesem Umfang geschmolzen, was den Anforderungen einer sicheren und einwandfreien Schweißnaht entspricht. Da beim Recyclingprozeß der gleiche Vorgang wie bei der Montage der Leuchte erfolgt, ist auch mit etwa gleichwertigem Energieeinsatz zu rechnen. Beide Schritte, das Fügen und Trennen der Leuchte, bedürfen nur geringer Energie und sind somit wirtschaftlich und kostengünstig durchführbar.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: die erfindungsgemäße Leuchte in Explosivdarstellung,
- Fig. 2: einen Schnitt durch einen Randbereich der Leuchte mit einer Fügestelle zwischen einer Lichtscheibe und einem Reflektorgehäuse,
- Fig. 3: einen Querschnitt durch die Leuchte,
- Fig. 4: ein Drahtgeflecht im Umriß des Fügebereiches,
- Fig. 5: einen Schnitt durch ein Drahtgeflecht,
- Fig. 6: einen Querschnitt durch ein Drahtgeflecht mit außen liegenden Drähten,
- Fig. 7: ein Drahtgeflecht mit außen liegenden Drähten im Umriß des Fügebereiches,
- Fig. 8: zwei Schweißdrähte mit zwischen den Drähten angeordneter Folie,
- Fig. 9: die Anschlußkonfiguration für den Schweißdraht.

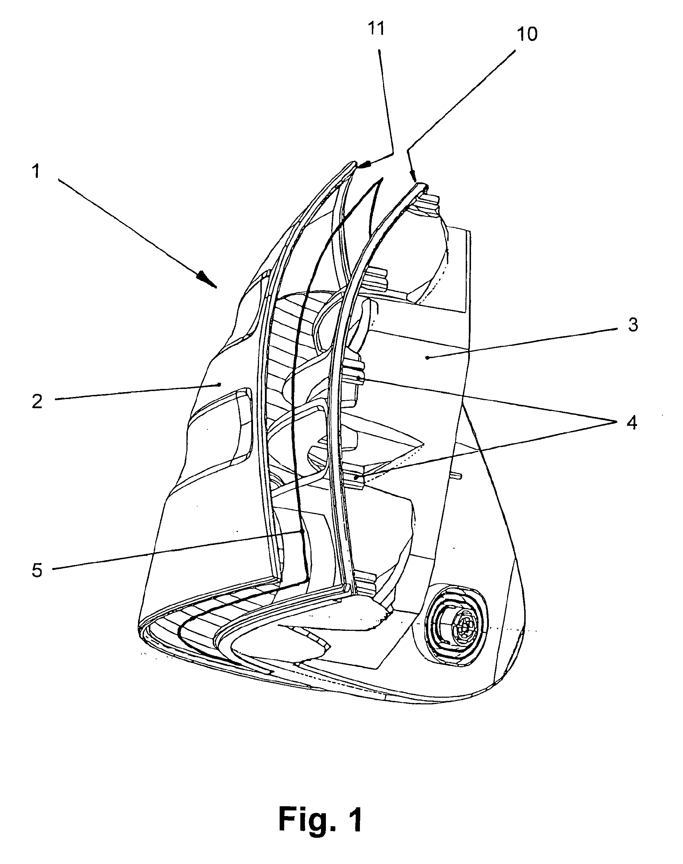

Fig. 1 zeigt eine Leuchte 1 mit einer Lichtscheibe 2, einem Gehäuse 3 und einem im Fügebereich 10, 11 zwischen dem Gehäuse 3 und der Lichtscheibe 2 angeordneten Widerstandsdraht 5. Die Leuchte 1 ist als Heckleuchte ausgebildet; sie kann aber auch eine andere Art von Leuchte sein.

Bei der Lichtscheibe 2 kann es sich um eine einschichtig oder zweischichtig hergestellte Lichtscheibe 2 handeln. Die Schichten der Lichtscheibe 2 können unterschiedlich eingefärbt und/oder unterschiedliche Strukturen aufweisen. Selbstverständlich können auf der Außenseite wie auf der Innenseite der Lichtscheibe 2 Optiken aufgebracht sein.

Das Gehäuse 3 ist in der Regel aus einem PC- oder einem ABC-Kunststoff hergestellt. Hierbei ist das Gehäuse 3 so ausgebildet, daß entsprechend den Lichtdurchtrittsbereichen der Lichtscheibe 2 Abteilungen/Abtrennungen für die einzelnen Lichtfunktionen angebracht sind. Diese Bereiche können zur Erhöhung der Lichtausbringung mit einer reflektierenden Beschichtung durch ein beispielsweise galvanisches Verfahren beschichtet sein. Im rückseitigen Bereich des Gehäuses 3 sind Befestigungsflansche 4 zur Montage der Leuchte 1 in der Karosserie vorgesehen.

Der zwischen der Lichtscheibe 2 und dem Gehäuse 3 vorhandene Draht 5 ist in seiner Kontur sowie in seiner Länge dem Fügebereich 10, 11 des Gehäuses 3 und der Lichtscheibe 2 angepaßt. Der Draht 5 kann zur Montage beispielsweise in eine umlaufende Nut in einen der Flansche 4 des Kontaktbereiches 10, 11 des Gehäuses 3 und/oder der Lichtscheibe 2 eingelegt werden. Es ist auch möglich, daß der Draht 5 durch aufgebrachte Klebepunkte im Kontaktbereich 10, 11 des Gehäuses 3 oder der Lichtscheibe 2 in seiner Position gehalten wird. Eine weitere Möglichkeit besteht darin, daß der Draht 5 selbst mit einer klebrigen Substanz überzogen ist, so daß er bei der Montage in seiner vorbestimmten Position gehalten wird. Diese Montagehilfe kann notwendig sein, da, wie in Fig. 1 ersichtlich, die Fügebereiche 10, 11 solcher Leuchten 1 stark gekrümmte Formen bzw. in manchen Bereichen einen von konvex auf konkav wechselnden Konturenverlauf aufweisen können.

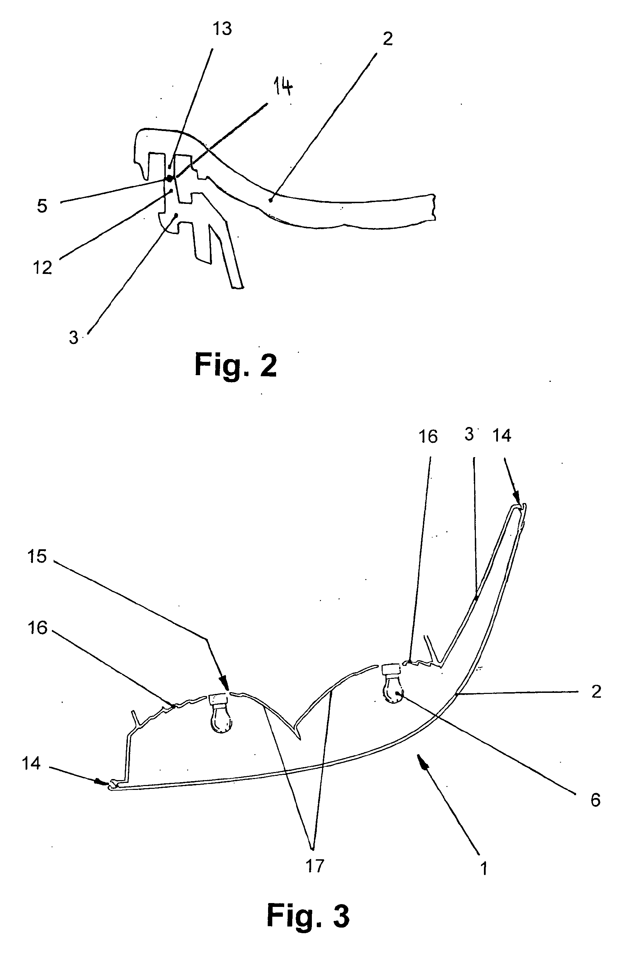

Fig. 2 zeigt einen Schnitt durch die Leuchte 1, bei der die Lichtscheibe 2 und das Gehäuse 3 im verschweißten Zustand abgebildet sind. Die Lichtscheibe 2 weist einen umlaufenden Flansch 13 auf, der im äußeren Randbereich der Lichtscheibe 2 vorgesehen ist und in Richtung auf das Gehäuse 3 ragt. Am Gehäuse 3 ist ein entsprechender, zur Lichtscheibe 2 zeigender umlaufender Flansch 12 vorgesehen. Bei der Montage der Lichtscheibe 2 und des Gehäuses 3 treffen beide Flansche 12, 13 mit ihren Flanschflächen im Fügebereich 14 aufeinander. Zwischen den Flanschen 12, 13 ist der Widerstandsdraht 5 vorgesehen. Da bei einem Schweißvorgang mittels eines Widerstandsdrahtes 5 im Kontaktbereich 10, 11 zwischen dem Draht 5 und den Flanschen 12, 13 die Lichtscheibe 2 und das Gehäuse 3 eine Erwärmung und somit ein Aufschmelzen des Kunststoffes stattfindet, können die Flansche 12, 13 entsprechend schmal ausgebildet sein.

Bei herkömmlichen Verbindungsverfahren, wie beispielsweise dem Verkleben von Flanschen, ist es in der Regel kaum zu vermeiden, daß zusätzlich aufgebrachtes Klebemittel (Klebstoff) beidseitig der umlaufenden Flansche 12, 13 von der Lichtscheibe 2 und dem Gehäuse 3 hervortreten kann.

Bei den modernen gebräuchlichen Leuchten 1 befinden sich die Schweißnähte oft im sichtbaren Bereich, weshalb ein- oder beidseitig hervorgetretener Klebstoff oder hervorgequollenes Material unerwünscht ist. Diese modernen Leuchten 1 sind in der Regel in einem Klarglasdesign hergestellt, so daß der gesamte Innenbereich und der Randbereich dieser Leuchte 1 von einem Betrachter erkannt werden können. Unschöne Schweißnähte, hervorquellender bzw. hervorgetretener Klebstoff/Zusatzmaterial würden den Gesamteindruck der Leuchte 1 beeinträchtigen.

Wird der sich zwischen den Flanschen 13, 12 der Lichtscheibe 2 und des Gehäuses 3 befindliche Widerstandsdraht 5 unter Strom gesetzt, erwärmt sich dieser und bringt den Kunststoff der Lichtscheibe 2 sowie des Gehäuses 3 im Fügebereich 14 zum Schmelzen. Bei genügend erwärmtem Kunststoff der Flansche 12, 13 wird ein Druck auf die Lichtscheibe 2 und auf das Gehäuse 3 ausgeübt. Die geschmolzenen Bereiche der Flansche 12, 13 vernetzen miteinander und gehen somit eine feste Verbindung ein. Das Gehäuse 2 und die Lichtscheibe 3 sind somit nach dem Abkühlen miteinander verschweißt.

Dieses Verfahren läßt sich schnell durchführen und ist besonders materialschonend. Es werden nur schmale Fügebereiche für die Erzielung einer einwandfreien Schweißnaht benötigt. Hierbei wird kein zusätzliches Material als Schweißwerkstoff oder als Kleber benötigt. Ein Hervortreten bzw. Hervorquellen von Flanschmaterialien kann einwandfrei vermieden werden.

Wie Fig. 3 zeigt, befinden sich die Fügebereiche 10, 11 nur im äußeren Randbereich der Leuchte 1. Das Gehäuse 3 ist in seinem rückseitigen Bereich als Reflektor 16 für die einzelnen Lampenfunktion ausgebildet. Die Öffnungen 15 für die Leuchtmittel 6 sind dabei in den Reflektor 16 eingebracht. Der der Lichtscheibe 2 zugewandte Innenbereich des Gehäuses 3 und der Reflektor 16 kann galvanisch verspiegelt sein. Diese galvanische Beschichtung stellt für viele Klebe- oder Verbindungsverfahren durch die metallische Dünnfilmbeschichtung im Fügebereich 3 ein Problem dar. Die Verwendung von Widerstandsschweißdrähten 5 zum Schmelzen von Kunststoff im Fügebereich 11, 10 der Lichtscheibe 2 und des Gehäuses 3 können diese Probleme beseitigen. Durch den direkten Kontakt und den partiell geringen Kontaktbereich 18 der Flansche 12, 13 schmilzt durch die schnelle und starke Erwärmung der Kunststoff unterhalb der galvanischen Beschichtung. Es entsteht eine Schmelze, die mit dem geschmolzenen Kunststoff der Lichtscheibe 2 eine Verbindung eingehen kann. Die dünne galvanische Beschichtung wird dabei in viele kleine Einzelstücke in der Schmelze und somit nicht sichtbar in der Schweißnaht eingeschlossen. Diese Bereiche sind häufig außerhalb des direkten Sichtbereiches und stören daher wenig. Selbstverständlich kann der Kunststoff der Lichtscheibe 2 in diesen Bereichen eingefärbt sein, so daß die Schweißnaht als solche von einem Betrachter kaum oder nicht mehr wahrgenommen werden kann.

Zwischen der Lichtscheibe 2 und dem Gehäuse 3 können zusätzliche (nicht dargestellte) Innenteile, wie beispielsweise Optikscheiben oder sonstige Optikelemente, mit entsprechenden Flanschen zwischen die Flansche 13, 12 der Lichtscheibe und des Gehäuses 3 eingelegt werden. In diesem Fall ist bei einer Widerstandsdrahtschweißung je ein Schweißdraht 5 zwischen der eingelegten Optikscheibe und der Lichtscheibe 2 und des Gehäuses 3 notwendig.

Das Verfahren der Widerstandsdrahtschweißung ist ein sehr schnelles Verfahren, da durch Anlegen einer geeigneten Spannung und eines entsprechenden hohen Stromes eine schnelle Erwärmung des Drahtes 5 erfolgt. Die Verschweißung unter geringem Anpreßdruck kann somit sehr schnell und prozeßsicher durchgeführt werden. Auch lassen sich durch dieses Schweißverfahren Schweißergebnisse in engeren Toleranzbereichen als bei den allgemein üblichen Schweißverfahren erzielen. Die Leuchte 1 wird mit ihren zu verschweißenden Bauteilen 2, 3 so aufeinandergefügt, daß bis auf den durch den Anpreßdruck während des Schweißvorganges benötigten Verformungsweg alle relevanten Positionen exakt festgelegt und bestimmt sind. Eine Nachbearbeitung der Schweißnähte kann im allgemeinen entfallen.

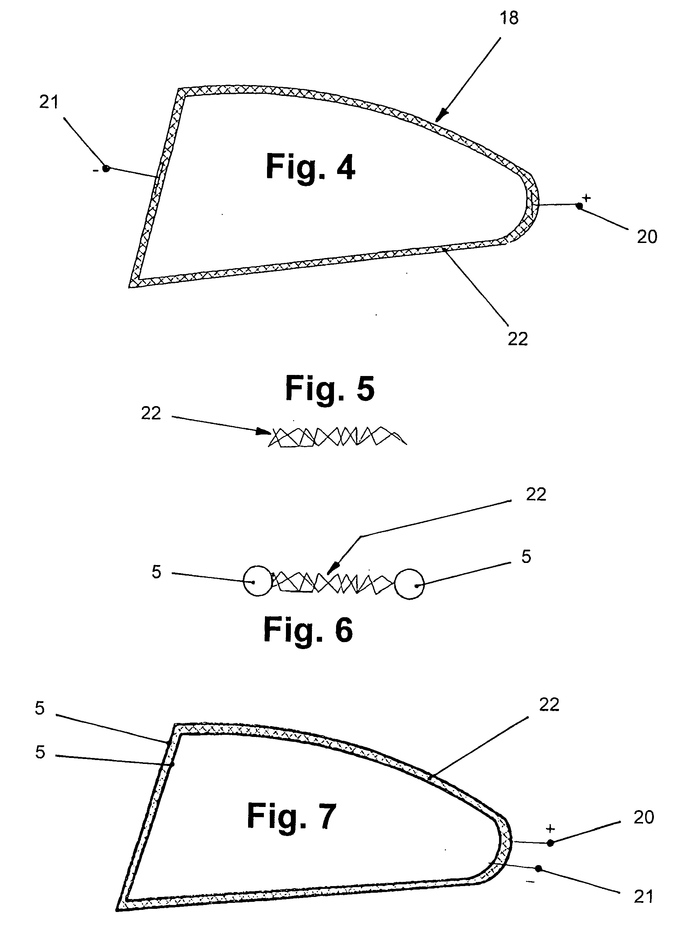

Fig. 4 zeigt ein Drahtgeflecht 22, das der Kontur 18 der zu verschweißenden Flansche 12, 13 entsprechend ausgebildet ist. Hierbei ist entgegen den vorher beschriebenen Ausführungsformen der Widerstandsdraht als Geflecht 22 aus dünnen Drähten ausgebildet. Derartige Geflechte haben den Vorteil, daß sie während der Montage leicht in den Fügebereich 14 der Leuchte 1 anzuordnen sind. Durch die bandartige Ausführung des Geflechtes 22 können breite Schweißnähte erreicht werden. Dies ist vorteilhaft, wenn die Schweißnaht im Sichtbereich der Leuchte 1 so ausgeprägt werden soll, daß die Schweißnaht als optisches Designelement genutzt wird. Eine breite Schweißnaht erscheint somit in einem matten Design im Randbereich der Leuchte 1. Es ist auch möglich, daß der Draht des Geflechtes 22 in seiner Dicke so ausgebildet ist, daß im Bereich der Schweißnaht Teilbereiche des Geflechtes 22 erkennbar sind. Somit können metallische Glanzeffekte in die Schweißnaht integriert werden.

Für den eigentlichen Schweißvorgang sind am Draht 5 sowie am Geflecht 22 jeweils ein Pluspol 20 und ein Minuspol 21 (Anode 20, Kathode 21) vorhanden. Diese Drahtanschlüsse 20, 21 können im rückseitigen Bereich der Leuchte 1 so positioniert werden, daß sie für einen Betrachter in montiertem Zustand der Leuchte 1 im Fahrzeug nicht erkennbar sind. Die elektrischen Anschlüsse 20, 21 können nach der Verschweißung im nahtnahen Bereich auch abgetrennt werden. Für einen schnellen und gleichmäßigen Schweißvorgang ist es erforderlich, daß die Positionierung der elektrischen Anschlüsse so gewählt wird, daß über den gesamten Draht 5 bzw. über das gesamte Geflecht 22 eine gleichmäßige Erwärmung stattfindet. Das Geflecht 22 kann in seiner breiten Ausdehnung sowie in der Drahtdicke variiert werden. Ferner kann das Geflecht 22 an manchen Stellen dichter ausgebildet sein. Bei einem reinen Drahtschweißvorgang ist es möglich, daß der Draht 5 in seiner Dicke entsprechend dem gesamten Erwärmungsverhalten variiert. Außerdem kann der Draht 5 aus verschiedenen Drahtmaterialien und somit unterschiedlichen Widerstandswerten zusammengesetzt sein. Dies ist selbstverständlich auch auf das Geflecht 22 anwendbar.

Fig. 6 zeigt ein Drahtgeflecht 22, das mit seinem Randbereich zwischen zwei außen liegenden Drähten 5 befestigt ist. Das Geflecht 22 bildet somit einen Steg zwischen den beiden außen liegenden Drähten 5. Die Verwendung der Drähte 5 ist besonders als Designelement geeignet. Der erheblich dünnere Drahtquerschnitt des Geflechtes 22 erfährt eine schnellere und damit eine frühere Erwärmung als die beidseitigen Randdrähte 5. Durch eine entsprechende Wahl der Drahtdurchmesser der umlaufenden Drähte 5 sowie des Geflechtes 22 und/oder einer Kombination der Werkstoffe der Widerstandsdrähte können sowohl das Geflecht 22 als auch die Randdrähte 5 zuerst den Schmelzvorgang bewirken. Geschieht das zuerst bei den umlaufenden Drähten 5, erscheint in der Schweißnaht das Geflecht 22 als metallisch silbern glänzender, umlaufender bandförmiger Streifen.

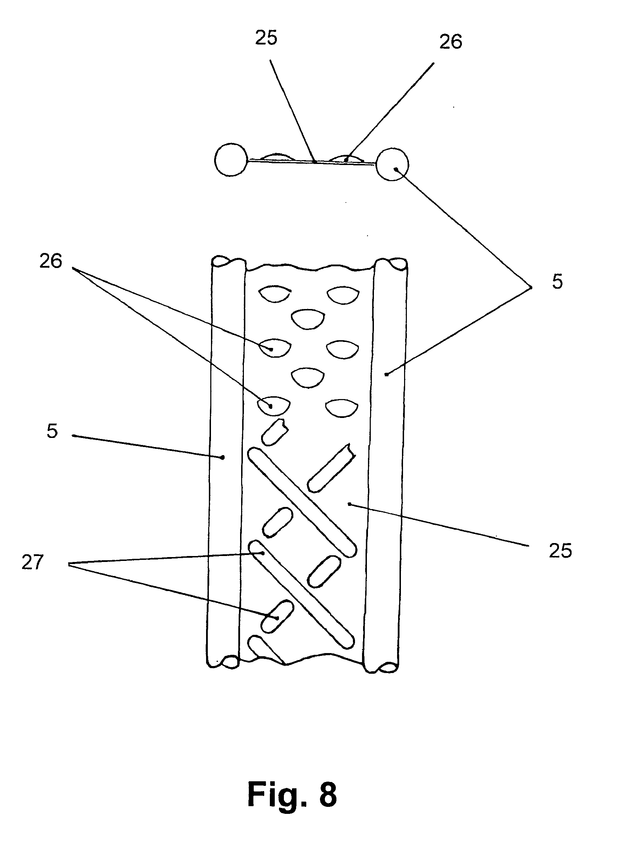

Eine solche Ausbildung des Schweißgeflechtes mit randseitig angebrachten umlaufenden Drähten 5 ist in Fig. 7 erkennbar. Auch hier ist die Fügekontur 18 der Verbindungsflansche 12, 13 abgebildet. Die elektrischen Anschlüsse 20, 21 können im Unterschied zur Ausführungsform nach Fig. 4 nicht gegenüberliegend, sondern an den gleichen Seiten angeordnet sein.

Gemäß Fig. 8 kann anstelle des Geflechtes 22 eine dünne Folie 25 in Bandform eingesetzt werden. Hierbei wird der aus dem Geflecht 22 bestehende Steg zwischen den umlaufenden Drähten 5 durch die bandförmige Folie 25 ersetzt. Zur besseren Vernetzung bzw. Verzahnung ist es möglich, daß auf der Folie 25 Strukturen oder Prägungen 26 aufgebracht werden. Sie werden während des Schweißvorganges von der Schmelze umschlossen und bilden somit eine besonders stabile Verbindung zwischen der bandförmigen Folie 25 und den Kunststoffen der Flansche 12, 13.

Als weitere Variante können in der Folie 25 Durchbrüche 27, zum Beispiel durch Stanzen oder Drücken, eingebracht sein. Hierbei wird der Durchbruch 27 von der Schmelze durchflossen und bildet somit einen besonders festen Verbund zwischen dem Kunststoff der Flansche 12, 13. Die bandförmige Folie 25 wird somit fester Bestandteil des Fügebereiches 14.

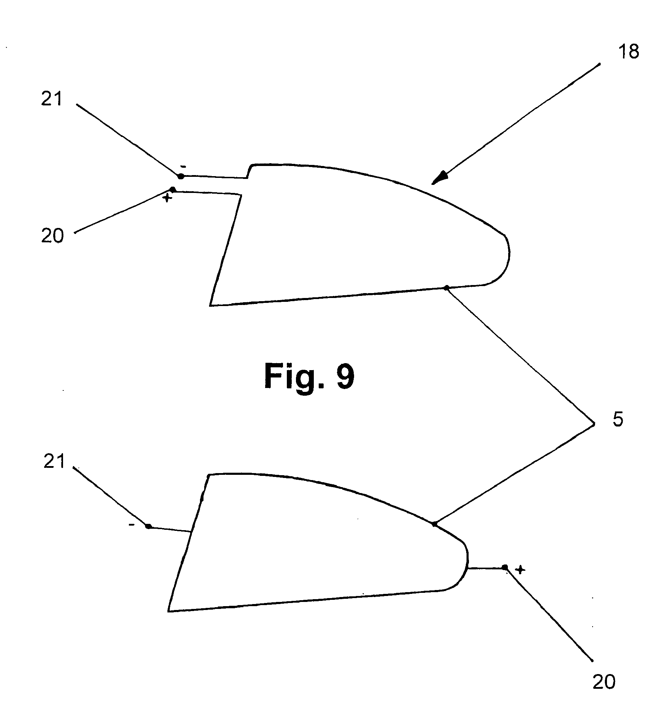

Fig. 9 zeigt die Anschlußkonfiguration bzw. die elektrische Anschlußbelegung. Die obere Abbildung in Fig. 9 zeigt den Schweißdraht 5 mit einem nicht geschlossenen Drahtverlauf. Der Schweißdraht 5 folgt im wesentlichen der Kontur 18 des Fügebereiches 14 der Leuchte 1. Er ist an zwei dicht benachbarten Stellen mit einem Ende an der Anode 20 und mit dem anderen Ende an der Kathode 21 mit einer Schweißspannungsquelle verbunden. Die untere Abbildung in Fig. 9 zeigt einen geschlossenen Drahtverlauf, bei dem an zwei einander gegenüberliegenden Enden die Anschlüsse 20, 21 separat am Schweißdraht 5 angebracht sind.

Ein weiterer Vorteil der Verwendung solcher Schweißdrähte 5 zeigt sich darin, daß auch zu einem späteren Zeitpunkt durch Anlegen eines Stromes an die elektrischen Anschlüsse 20, 21 die erneute Erwärmung des Widerstandsdrahtes 5 bzw. des Geflechtes 22 möglich ist. Es kann eine Trennung zwischen der Lichtscheibe 2 und dem Gehäuse 3 erfolgen. Dies ist dann von Vorteil, wenn für die Kunststoffe hochwertige Materialien verwendet werden und diese für einen Recyclingprozeß entsprechend getrennt werden sollen.

## Patentansprüche

1. Leuchte für Fahrzeuge, vorzugsweise für Kraftfahrzeuge, bestehend aus einem Gehäuse (3), einer Lichtscheibe (2) und mindestens einem in der Leuchte (1) vorhandenen Leuchtmittel (6), dessen Lichtstrahlen durch die Lichtscheibe (2) nach außen treten, die mit dem Gehäuse (3) fest verbunden ist,
**dadurch gekennzeichnet, daß** die Lichtscheibe (2) und das Gehäuse (3) über einen Widerstandsschweißvorgang miteinander fest verbunden sind, der durch Bestromen mindestens eines Widerstandselementes (5, 22, 25) erfolgt.

2. Leuchte nach Anspruch 1,
**dadurch gekennzeichnet, daß** sich das Widerstandselement (5, 22, 25) im Kontaktbereich (11) zwischen einem Flansch (13) der Lichtscheibe (2) und einem Flansch (12) des Gehäuses (3) befindet.

3. Leuchte nach Anspruch 1 oder 2,
**dadurch gekennzeichnet, daß** das Widerstandselement (5) der räumlichen Kontur des Kontaktbereiches (18) zwischen der Lichtscheibe (2) und dem Gehäuse (3) angepaßt ist.

4. Leuchte nach einem der Ansprüche 1 bis 3,
**dadurch gekennzeichnet, daß** das Widerstandselement (5) über einen Anodenanschluß (20) und über einen Kathodenanschluß (21) verfügt, die sich vorteilhaft entsprechend dem Konturverlauf des Kontaktbereiches (18) im wesentlichen gegenüberliegend am Umfang des Widerstandselementes (5) befinden.

5. Leuchte nach einem der Ansprüche 1 bis 4,
**dadurch gekennzeichnet, daß** das Widerstandselement (5, 22) aus mindestens zwei unterschiedlichen Materialien mit unterschiedlichen ohmschen Widerständen und/oder aus mindestens zwei unterschiedlichen Profilen zusammengesetzt ist.

6. Leuchte nach einem der Ansprüche 1 bis 5,
**dadurch gekennzeichnet, daß** das Widerstandselement (5, 22) im Kontaktbereich (18) zwischen der Lichtscheibe (2) und dem Gehäuse (3) zur Montage mittels Klebestellen fixiert ist.

7. Leuchte nach einem der Ansprüche 1 bis 6,
**dadurch gekennzeichnet, daß** das Widerstandselement (5) im Kontaktbereich (18) zwischen der Lichtscheibe (2) und dem Gehäuse (3) zur Montage mit einer klebrigen Beschichtung versehen und vorteilhaft in einer Nut des Flansches (12) des Gehäuses (3) und/oder in einer Nut des Flansches (13) der Lichtscheibe (2) aufgenommen und geführt ist.

8. Leuchte nach einem der Ansprüche 1 bis 7,
**dadurch gekennzeichnet, daß** das Widerstandselement (5) als Widerstandsdraht ausgebildet oder aus einem dünnen Drahtgeflecht (22) besteht, das vorzugsweise bandförmig ausgebildet und vorteilhaft unterschiedlich geformt ist.

9. Leuchte nach Anspruch 8,
**dadurch gekennzeichnet, daß** das Drahtgeflecht (22) aus mindestens zwei unterschiedlichen Materialien mit unterschiedlichem ohmschen Widerstand und/oder aus mindestens zwei unterschiedlichen Profilen mit unterschiedlichen Geflechtdrahtdurchmessern besteht.

10. Leuchte nach Anspruch 8 oder 9,
**dadurch gekennzeichnet, daß** das Drahtgeflecht (22) an seiner umlaufenden inneren und äußeren Seite je einen umlaufenden Widerstandsdraht (5) aufweist, und daß diese Widerstandsdrähte (5) mindestens den 1,5fachen Durchmesser des Drahtgewebedurchmessers aufweisen.

11. Leuchte nach Anspruch 10,
**dadurch gekennzeichnet, daß** der Anodenanschluß (20) und der Kathodenanschluß (21) sich an den umlaufenden seitlichen Widerstandsdrähten (5) an der gleichen Seite des Konturverlaufs (18) des Drahtgeflechtes (22) befinden.

12. Leuchte nach einem der Ansprüche 1 bis 7,
**dadurch gekennzeichnet, daß** das Widerstandselement eine bandartige Folie (25) ist, die vorteilhaft eine Struktur (26) und/oder Durchbrüche (27) aufweist.
